# EUROPÄISCHE PATENTSCHRIFT

(11) **EP 4 301 609 B1**
(45) Veröffentlichungstag und Bekanntmachung des Hinweises auf die Patenterteilung: **12.02.2025**
(21) Anmeldenummer: 21835983.4
(22) Anmeldetag: 02.12.2021
(51) Int. Cl.: B60C 11/04, B60C 11/03, B60C 11/12

(54) **FAHRZEUGLUFTREIFEN**
TYRE
PNEUMATIQUE

(30) Priorität: 05.03.2021 US 202163157040 P
(43) Veröffentlichungstag der Anmeldung: 10.01.2024
(73) Patentinhaber: Continental Reifen Deutschland GmbH, 30175 Hannover (DE)
(72) Erfinder: TOMFORDE, Willem, 30165 Hannover (DE); BEHR, Ulrich, 30165 Hannover (DE); LAMB, Matthew, 30165 Hannover (DE)
(74) Vertreter: Continental Corporation
(86) Internationale Anmeldenummer: PCT/EP2021/084051
(87) Internationale Veröffentlichungsnummer: WO 2022/184299

(56) Entgegenhaltungen:
- EP-A1- 0 625 436
- EP-A1- 3 456 552
- EP-A1- 3 628 510
- EP-A1- 3 628 511

## Beschreibung

Die Erfindung betrifft einen Fahrzeugluftreifen mit einem Laufstreifen mit zumindest einer von einer Umfangsrille begrenzten schulterseitigen Profilrippe mit einer in der Laufstreifenperipherie liegenden Profilrippenaußenfläche, wobei die schulterseitige Profilrippe mit einer Vielzahl von in Draufsicht parallel zueinander verlaufenden, vor der Umfangsrille endenden Querrillen mit jeweils einem Rillengrund und einer laufstreifeninnenseitig an den Rillengrund anschließenden und in Fortsetzung zu diesem zur Profilrippenaußenfläche verlaufenden Endflanke versehen sind.

Ein derartiger Fahrzeugluftreifen ist beispielsweise aus der gattungsbildenden EP 3 628 510 A1 bekannt. Der Fahrzeugluftreifen weist einen Laufstreifen mit einer schulterseitigen Profilrippe mit Querrillen auf, wobei die Querrillen einen Hauptabschnitt und einen laufstreifeninnenseitig an den Hauptabschnitt anschließenden, zur Profilrippenaußenfläche auslaufenden Auslaufabschnitt aufweisen. Der Auslaufabschnitt ist schmäler ausgeführt als der Hauptabschnitt, wobei die eine Rillenflanke der Querrille am Auslaufabschnitt endet und die andere Rillenflanke der Querrille im Auslaufabschnitt fortgeführt ist. Die im Auslaufabschnitt fortgeführte Rillenflanke liegt eine Flanke gegenüber, welche zumindest abschnittsweise zur Profilrippenaußenfläche mit einer Fase versehen ist. Die Fase weist an der Profilrippenaußenfläche eine Fasenkante auf, welche an die Rillenkante der am Auslaufabschnitt endenden Rillenflanke anschließt. Derart ausgeführte Querrillen reduzieren den Beitrag der schulterseitigen Profilrippe zum Abrollgeräusch, wobei weiterhin eine gute Wasserableitung auf nassen Untergrund sichergestellt ist.

Aus der EP 0 625 436 A1 ist ein Fahrzeugluftreifen mit einem Laufstreifen mit Profilblöcken bekannt, die jeweils mit einer Kanal-Einschnitt-Kombination versehen sind, wobei der Kanal an unterschiedlichen Profilblockbereichen nach außen mündet. Der Kanal kann den Einschnitt beispielsweise L-förmig umlaufen und eine an der Laufstreifenperipherie liegende Kanalöffnung aufweisen. Die Kanäle erhöhen das Wasserableitvermögen und sollen zu einer Verringerung des Reifen-Fahrbahn-Geräusches beitragen.

Die EP 3 628 511 A1 offenbart einen Fahrzeugluftreifen mit einem Laufstreifen mit einer schulterseitigen Profilrippe mit Querrillen, welche vor der die schulterseitige Profilrippe begrenzenden Umfangsrille in einem in axialer Richtung ermittelten Abstand von 3,0 mm bis 10,0 mm enden. Zu den Querrillen gehören erste Querrillen und zweite Querrillen, wobei der Abstand der ersten Querrillen zur Umfangsrille kleiner ist als der Abstand der zweiten Querrillen zur Umfangsrille und wobei in Umfangsrichtung eine erste Querrille abwechselnd auf eine zweite Querrille folgt. In der schulterseitigen Profilrippe ist bei jeder zweiten Querrille je eine von der Umfangsrille ausgehende zur Laufstreifenperipherie offene Vertiefung ausgebildet. Eine solche Profilrippe wird - unter Aufrechterhaltung einer hohen Steifigkeit - beim Fahren auf nasser Fahrbahn gut entwässert.

Die EP 3 456 552 A1 offenbart einen Fahrzeugluftreifen, welcher insbesondere als Rennreifen für mehrspurige Kraftfahrzeuge vorgesehen ist und welcher einen Laufstreifen mit einer zentralen Profilrippe und zwei von der zentralen Profilrippe durch je eine Umfangsrille getrennte, relativ breit ausgeführte, schulterseitige Profilrippen aufweist. In den schulterseitigen Profilrippen sind erste Querrillen und zweite Querrillen ausgebildet, wobei die ersten Querrillen zur jeweiligen Umfangsrille einen kleineren Abstand aufweisen als die zweiten Querrillen und wobei in Umfangsrichtung eine erste Querrille abwechselnd auf eine zweite Querrille folgt. Ferner ist jede schulterseitige Profilrippe bei jeder zweiten Querrille mit einer lokalen, rillenförmigen Vertiefung versehen, welche beidseitig geschlossen in der schulterseitigen Profilrippe endet und die Nässeperformance verbessern soll.

Die in schulterseitigen Profilrippen ausgebildeten Querrillen unterstützen beim Fahren auf nasser Fahrbahn die Entwässerung des Laufstreifens, was vor allem für das Aquaplaningverhalten des Reifens wichtig ist, und stellen Griffkanten an der Profilrippenaußenfläche zur Verfügung, welche zur Verbesserung des Nassgriffeigenschaften beitragen. In schulterseitigen Profilrippen befindliche Querrillen spielen somit eine entscheidende Rolle im Hinblick auf die Nässeperformance des Fahrzeugluftreifens. Die Ausgestaltung von Querrillen hat dabei insbesondere unter Berücksichtigung der durch die Querrillen bedingten reduzierten Kontaktfläche der Profilrippe zum Untergrund und der reduzierten Steifigkeit der Profilrippe zu erfolgen, da eine große Kontaktfläche und eine hohe Steifigkeit für die Trockenperformance des Fahrzeugluftreifens, beispielsweise für die Handlingeigenschaften, von Vorteil sind. Die Nässe- und die Trockenperformance sollen dabei insbesondere über den Laufstreifenabrieb erhalten bleiben.

Der Erfindung liegt daher die Aufgabe zugrunde, bei einem Fahrzeugluftreifen der eingangs genannten Art die Balance zwischen der Nässe- und der Trockenperformance zu optimieren.

Gelöst wird die gestellte Aufgabe erfindungsgemäß dadurch, dass Querrillen vorgesehen sind, bei welchen jeweils innerhalb der schulterseitigen Profilrippe eine über die Endflanke in die jeweilige Querrille einmündende Kanal-Einschnitt-Kombination aus einem von der Profilrippenaußenfläche ausgehenden Einschnitt mit einer Breite von 0,4 mm bis 1,2 mm und einem von der Profilrippenaußenfläche ausgehenden, rohrförmigen Kanal ausgebildet ist, wobei der rohrförmige Kanal über seine gesamte Erstreckung an den Einschnitt angrenzt und diesen L-förmig umläuft, wobei der Kanal einen sich zur Endflanke verjüngenden Kanalendabschnitt aufweist.

Beim Abrollen des Reifens bewirkt der Kontakt des Laufstreifens mit dem Untergrund ein Öffnen der Einschnitte, sodass beim Fahren auf nasser Fahrbahn Wasser über die Einschnitte sowie über die an der Profilrippenaußenfläche liegende Kanalöffnung des rohrförmigen Kanals aufgenommen wird. Da in den Einschnitt fließendes Wasser in den rohrförmigen Kanal und über dessen sich verjüngenden Kanalendabschnitt auf beschleunigte Weise in die Querrille abgeleitet wird, stellt die erfindungsgemäß vorgesehene Einschnitt-Kanal-Kombination eine wirkungsvolle Entwässerung der schulterseitigen Profilrippe in Richtung zur Laufstreifenschulter sicher, sodass eine gute Nässeperformance gewährleistet ist. Die Querrillen sind gegenüber üblichen Querrillen im Bereich der Bodenaufstandsfläche kürzer ausgeführt, sodass die Kontaktfläche und die Steifigkeit der schulterseitigen Profilrippe vergrößert und derart die Trockenperformance optimiert ist.

Gemäß einer bevorzugten Ausführung weist der Kanal außerhalb des Kanalendabschnittes einen Durchmesser von 170% bis 300%, insbesondere von 220% bis 280%, bevorzugt von 240% bis 260%, der Breite des Einschnittes auf. Diese Maßnahme ist für das Wasserdrainagevermögen des Kanals und daher für die Nässeperformance des Reifens zusätzlich von Vorteil.

Ein besonders verwirbelungsarmes Ausströmen des Wassers aus dem Kanal in die Querrille ist sichergestellt, wenn der Kanalendabschnitt die Form eines Kegelstumpfes aufweist.

Gemäß einer weiteren bevorzugten Ausführung weist der Kanalendabschnitt an der Endflanke einen Durchmesser von 95% bis 105%, insbesondere von 100%, der Breite des Einschnittes auf. Dies begünstigt eine beschleunigte Ableitung des Wassers aus dem Kanal in die Querrille.

Gemäß einer weiteren bevorzugten Ausführung setzt sich der Kanal aus dem Kanalendabschnitt, einem von der Profilrippenaußenfläche ausgehenden Kanalabschnitt und einem mittleren Kanalabschnitt zusammen, wobei der Kanalendabschnitt mit dem mittleren Kanalabschnitt den längeren L-Balken der L-Form und der Kanalabschnitt, welcher von der Profilrippenaußenfläche ausgeht, den kürzeren L-Balken der L-Form bildet. Dies trägt zu einer weiteren Verbesserung des Wasserableitvermögens der Kanal-Einschnitt-Kombination und derart zu einer weiteren Verbesserung der Nässeperformance bei.

Weitere Ausgestaltungen tragen dazu bei, die letztgenannte bevorzugte Ausführung im Hinblick auf die Nässeperformance noch weiter zu verbessern.

Eine dieser Ausgestaltungen besteht darin, dass der mittlere Kanalabschnitt und der Kanalendabschnitt einen gemeinsamen Rotationskörper mit einer Hauptachse bilden. Dies trägt zu einer verwirbelungsarmen Wasserströmung im Kanal bei.

Dabei ist es von Vorteil, wenn die Hauptachse des gemeinsamen Rotationskörpers, welcher vom Kanalendabschnitt und dem mittleren Kanalabschnitt gebildet ist, in einer in radialer Richtung ermittelten Tiefe von 45% bis 75%, insbesondere von 50% bis 70%, besonders bevorzugt von 55% bis 65%, der maximalen Tiefe der Querrille verläuft. Diese Maßnahme trägt ferner dazu bei, dass eine hohe Steifigkeit der schulterseitigen Profilrippe im Bereich des Kanals erhalten bleibt und ist somit auch für die Trockenperformance von Vorteil.

Ferner ist es dieser Ausgestaltung günstig, wenn der mittlere Kanalabschnitt und der Kanalendabschnitt jeweils eine entlang der Hauptachse ermittelte Länge aufweisen, wobei die Länge des Kanalendabschnittes 30% bis 70%, insbesondere 40% bis 60%, bevorzugt 45% bis 55%, der Länge des mittleren Kanalabschnittes beträgt. Ein solcher Kanal ist vor allem im Hinblick auf seine Wasseraufnahmekapazität als auch im Hinblick auf sein Wasserdrainageverhalten besonders vorteilhaft.

Gemäß einer weiteren bevorzugten Ausführung weist der Kanal an der Profilrippenaußenfläche eine Kanalöffnung auf, die zur schulterseitigen Umfangsrille einen Abstand von 2,0 mm bis 8,0 mm, insbesondere von bis zu 5,0 mm, aufweist, wobei der Abstand als kleinstmöglicher Abstand zwischen der schulterseitigen Umfangsrille und dem Lochkreis der radial äußeren Kanalöffnung ermittelt ist.

Eine weitere, insbesondere für die Nässeperformance günstige Ausführung ist dadurch gekennzeichnet, dass die Kanal-Einschnitt-Kombination bezüglich einer Ebene, welche von einer in Draufsicht zur axialen Richtung unter einem Winkel von 0° bis 10°, insbesondere von 2° bis 7°, verlaufenden Geraden und einer in radialer Richtung verlaufenden Geraden aufgespannt ist, symmetrisch ausgebildet ist.

Bei dieser Ausführung ist es von Vorteil, wenn die Ebene die Querrille, in Draufsicht betrachtet, in ihrer Längserstreckung durchquert. Dies ist für die Wasserableitung von der Einschnitt-Kanal-Kombination in die Querrille sowie die Weiterleitung des Wassers in den Bereich außerhalb der Bodenaufstandsfläche günstig.

Ferner ist es bei dieser Ausführung von Vorteil, wenn sich die Endflanke der Querrille aus einem unmittelbar an den Rillengrund anschließenden, radial inneren Endflankenabschnitt und einem zur Profilrippenaußenfläche verlaufenden radial äußeren Endflankenabschnitt, über welchen die Einschnitt-Kanal-Kombination in die Querrille einmündet, zusammensetzt, wobei der radial äußere Endflankenabschnitt, im in die Ebene projizierten Querschnitt betrachtet, zur radialen Richtung unter einem Winkel von 0° bis 10°, insbesondere von 3° bis 7°, verläuft und wobei der radial innere Endflankenabschnitt, im in der Ebene liegenden Querschnitt betrachtet, kreisbogenförmig verläuft und knickfrei an den Rillengrund anschließt. Der radial äußere Endflankenabschnitt hat eine abstützende Wirkung auf die Querrille, versteift die Querrille und somit die schulterseitige Profilrippe lokal, was im Hinblick auf die Trockenperformance günstig ist. Der kreisbogenförmig verlaufende radial innere Flankenabschnitt trägt zu einem verwirbelungsarmen Wasserfluss vom Kanal in die Querrille bei. Diese Ausführung ist daher für die Balance zwischen der Nässe- und der Trockenperformance von besonderem Vorteil.

Gemäß einer weiteren bevorzugten Ausführung weist die Querrille, in Draufsicht betrachtet, einen abschnittweise innerhalb und abschnittsweise außerhalb der Bodenaufstandsfläche verlaufenden Hauptabschnitt und einen an das laufstreifeninnenseitige Ende des Hauptabschnittes anschließenden Verjüngungsabschnitt, in welchem die Endflanke ausgebildet ist und welcher sich an der Profilrippenaußenfläche vom Hauptabschnitt zum Einschnitt kontinuierlich verschmälert, auf. Der Verjüngungsabschnitt trägt zu einem verwirbelungsarmen Wasserfluss von der Kanal-Einschnitt-Kombination in den Hauptabschnitt bei. Der Hauptabschnitt ist für die Entwässerungsleistung der Querrille von Vorteil.

In diesem Zusammenhang ist es ferner von Vorteil, wenn der Hauptabschnitt innerhalb der Bodenaufstandsfläche an der Profilrippenaußenfläche eine Breite von 3,0 mm bis 7,0 mm aufweist.

Der Verjüngungsabschnitt weist am Niveau der Profilrippenaußenfläche an seinem laufstreifeninnenseitigen Ende eine Breite von 1,5 mm bis 3,0 mm, vorzugsweise von höchstens 2,0 mm, auf.

Weitere Merkmale, Vorteile und Einzelheiten der Erfindung werden nun anhand der Zeichnung, die schematisch ein Ausführungsbeispiel der Erfindung zeigt, näher erläutert. Dabei zeigen
Fig. 1 eine Draufsicht auf einen Umfangsabschnitt einer schulterseitigen Profilrippe eines Laufstreifens eines Fahrzeugluftreifens mit einer Ausführungsvariante der Erfindung,
Fig. 2 eine vergrößerte Draufsicht auf das Detail Z₂ der Fig. 1,
Fig. 3 einen vergrößerten Schnitt entlang der Linie III-III der Fig. 2,
Fig. 4 eine Detailansicht gemäß der in Fig. 2 durch den Peil S₄ angedeuteten Sichtrichtung,
Fig. 5 eine entlang der Linie V-V der Fig. 2 aufgeschnittene, vergrößerte Schrägansicht und
Fig. 6 einen vergrößerten Schnitt entlang der Linie VI-VI der Fig. 2.

Gemäß der Erfindung ausgeführte Fahrzeugluftreifen sind Reifen für Kraftfahrzeuge, insbesondere für mehrspurige Kraftfahrzeuge, sowie vorzugsweise Reifen in Radialbauart für Personenkraftwagen, Vans oder Light-Trucks (Leichte LKWs mit zGM ≤ 7,5 t).

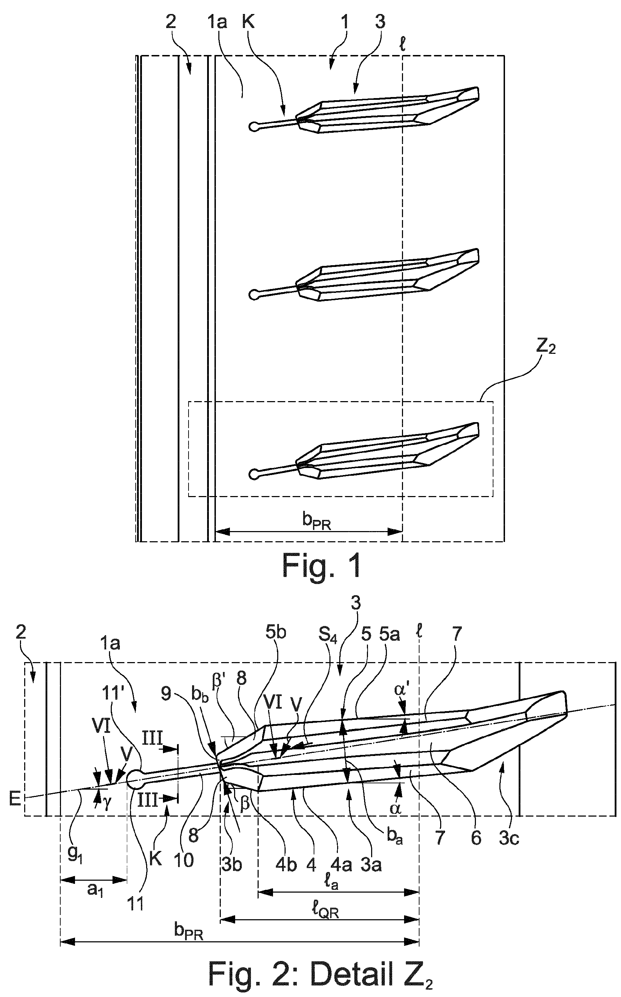

Fig. 1 zeigt einen Umfangsabschnitt einer schulterseitigen Profilrippe 1. Der seitliche Rand der Bodenaufstandsfläche (ermittelt mit einem auf einer Normfelge montierten Reifen, Last bei 70 % der maximalen Tragfähigkeit, Innendruck 85 % des Normdruckes, gemäß ETRTO-Standards) ist durch eine gestrichelte Linie 1 gekennzeichnet.

Der Laufstreifen ist - bezogen auf die Reifenäquatorialebene - vorzugsweise asymmetrisch ausgeführt, sodass im zweiten, nicht gezeigten schulterseitigen Laufstreifenbereich eine schulterseitige Profilrippe ausgebildet ist, deren Ausgestaltung von jener der gezeigten schulterseitigen Profilrippe 1 abweicht und wobei der Fahrzeugluftreifen derart auf einem Fahrzeug zu montieren ist, dass die gezeigte schulterseitige Profilrippe 1 der Fahrzeuginnenseite zugeordnet ist.

Die schulterseitige Profilrippe 1 weist eine an der Laufstreifenperipherie liegende Profilrippenaußenfläche 1a sowie eine innerhalb der Bodenaufstandsfläche, an der Laufstreifenperipherie in axialer Richtung ermittelte Breite b_{PR} auf und ist laufstreifeninnenseitig von einer in Fig. 1 lediglich angedeuteten, beim gezeigten Ausführungsbeispiel in Draufsicht gerade verlaufenden, schulterseitigen Umfangsrille 2 begrenzt, welche in der jeweils vorgesehenen Profiltiefe ausgeführt ist, die für Personenkraftwagen, Vans oder Light-Trucks üblicherweise 6,5 mm bis 8,5 mm beträgt.

Ferner ist die schulterseitige Profilrippe 1 über ihre Umfangserstreckung mit einer Vielzahl von in Draufsicht parallel zueinander verlaufenden schulterseitigen Querrillen 3 versehen, welche über den seitlichen Rand (Linie 1) der Bodenaufstandsfläche hinausverlaufen und laufstreifeninnenseitig innerhalb der schulterseitigen Profilrippe 1 in einem in axialer Richtung ermittelten Abstand vor der schulterseitigen Umfangsrille 2 enden. An das laufstreifeninnenseitige Ende jeder Querrille 3 schließt eine in der schulterseitigen Profilrippe 1 ausgebildete Kanal-Einschnitt-Kombination K an.

Die weitere Ausgestaltung der schulterseitigen Querrillen 3 wird nachfolgend anhand einer einzelnen Querrille 3 mit zugehöriger Kanal-Einschnitt-Kombination K sowie unter Bezugnahme auf Fig. 2 bis Fig. 6 erläutert.

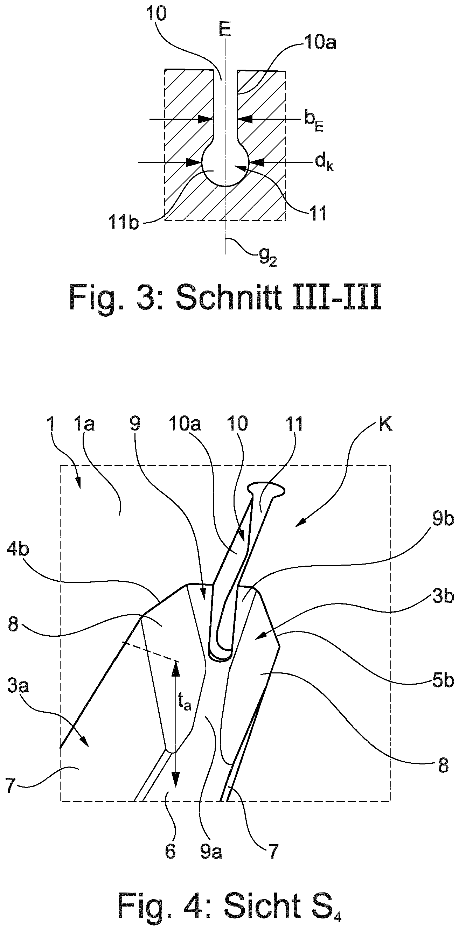

Gemäß Fig. 2 ist die Kanal-Einschnitt-Kombination K, auf deren Ausgestaltung später noch im Detail eingegangen wird, bezüglich einer Ebene E, welche von einer in Draufsicht zur axialen Richtung unter einem Winkel γ von 0° bis 10°, insbesondere von 2° bis 7°, verlaufenden Geraden g₁ und einer in radialer Richtung verlaufenden Geraden g₂ (Fig. 3) aufgespannt ist, symmetrisch ausgebildet.

Die Querrille 3 ist derart ausgeführt, dass die Ebene E, in Draufsicht betrachtet, die Querrille 3 in ihrer Längserstreckung durchquert, sodass die Ebene E die Erstreckungsrichtung der Querrille 3 definiert. Die Querrille 3 weist innerhalb der Bodenaufstandsfläche, eine an der Profilrippenaußenfläche 1a ermittelte, auf die Ebene E bezogene, in die axiale Richtung projizierte Länge 1_{QR} von 45% bis 65%, insbesondere von 50% bis 60%, der Breite b_{PR} der schulterseitigen Profilrippe 1 auf. Die Querrille 3 setzt sich, in Draufsicht betrachtet, aus einem abschnittweise innerhalb und abschnittsweise außerhalb der Bodenaufstandsfläche verlaufenden Hauptabschnitt 3a, einem außerhalb der Bodenaufstandsfläche befindlichen, auslaufenden Schulterabschnitt 3c und einem an das laufstreifeninnenseitige Ende des Hauptabschnittes 3a anschließenden Verjüngungsabschnitt 3b zusammen. Ferner weist die Querrille 3 an der Profilrippenaußenfläche 1a zwei über die Bodenaufstandsfläche hinausverlaufende Rillenkanten 4, 5 auf, welche jeweils über den Hauptabschnitt 3a, den Verjüngungsabschnitt 3b und den Schulterabschnitt 3c verlaufen.

Die Rillenkanten 4, 5 weisen einen im Hauptabschnitt 3a verlaufenden Kantenabschnitt 4a bzw. 5a und einem im Verjüngungsabschnitt 3b verlaufenden Kantenabschnitt 4b bzw. 5b auf. Die Kantenabschnitte 4a, 5a verlaufen in Draufsicht betrachtet gerade sowie zur axialen Richtung unter einem Winkel α (Kantenabschnitt 4a) bzw. α' (Kantenabschnitt 5a), wobei die Winkel α, α' jeweils 0° bis 10°, insbesondere 2° bis 7°, betragen und wobei die Kantenabschnitte 4a, 5a beim gezeigten Ausführungsbeispiel bezüglich der axialen Richtung gleichsinnig zueinander geneigt sind. Die Kantenabschnitte 4b, 5b verlaufen in Draufsicht betrachtet ebenfalls gerade sowie zur axialen Richtung unter einem Winkel β (Kantenabschnitt 4b) bzw. β' (Kantenabschnitt 5b), wobei die Winkel β, β' jeweils 15° bis 30° betragen und wobei die Kantenabschnitte 4b, 5b bezüglich der axialen Richtung derart gegensinnig zueinander geneigt sind, dass sie sich in Richtung zur schulterseitigen Umfangsrille 2 aneinander annähern. Der Winkel β und der Winkel β' können um insbesondere bis zu 10° voneinander abweichen.

Der Hauptabschnitt 3a weist - jeweils innerhalb der Bodenaufstandsfläche - eine an der Profilrippenaußenfläche 1a ermittelte, auf die Ebene E bezogene, in die axiale Richtung projizierte Länge lₐ von 70% bis 90%, insbesondere von 75% bis 80%, der Länge l_{QR} der Querrille 3, eine in radialer Richtung ermittelte maximale Tiefe tₐ (Fig. 4) von 75% bis 100%, insbesondere von höchstens 95%, der Profiltiefe und eine als kleinstmöglichen Abstand zwischen dem Kantenabschnitt 4a und dem Kantenabschnitt 5a ermittelte Breite bₐ von 3,0 mm bis 7,0 mm auf. Die Länge lₐ ist dabei ferner auf das laufstreifeninnenseitige Ende jenes Kantenabschnittes 4a, 5a bezogen, welches weiter laufstreifeninnenseitig liegt. Der Hauptabschnitt 3a ist durch einen Rillengrund 6 und zwei Rillenflanken 7, von welchen die eine vom Kantenabschnitt 4a und die andere vom Kantenabschnitt 5a ausgeht, und welche, im Querschnitt senkrecht zum zugehörigen Kantenabschnitt 4a, 5a betrachtet, zur radialen Richtung unter einem Winkel von 0° bis 5° verlaufen, begrenzt.

Der Verjüngungsabschnitt 3b verschmälert sich am Niveau an der Profilrippenaußenfläche 1a ausgehend vom Hauptabschnitt 3a kontinuierlich in Richtung zur schulterseitigen Umfangsrille 2 und weist ermittelt zwischen den laufstreifeninnenseitigen Enden der Kantenabschnitte 4b und 5b eine Breite b_{b} von 1,5 mm bis 3,0 mm, vorzugsweise von höchstens 2,0 mm, auf. Wie Fig. 2 insbesondere in Kombination mit Fig. 4 zeigt, ist der Verjüngungsabschnitt 3b durch zwei seitliche Flanken 8 und eine Endflanke 9 begrenzt. Die seitlichen Flanken 8 gehen von den Kantenabschnitten 4b, 5b aus, schließen an den Rillenflanken 7 an und verlaufen, im Querschnitt senkrecht zum zugehörigen Kantenabschnitt 4b, 5b betrachtet, zur radialen Richtung unter einem Winkel von 0° bis 5°, insbesondere von zumindest 2°. Die Endflanke 9 erstreckt sich zwischen den Flanken 8, schließt an den Rillengrund 6 an und verläuft in Fortsetzung zu diesem bis zur Profilrippenaußenfläche 1a.

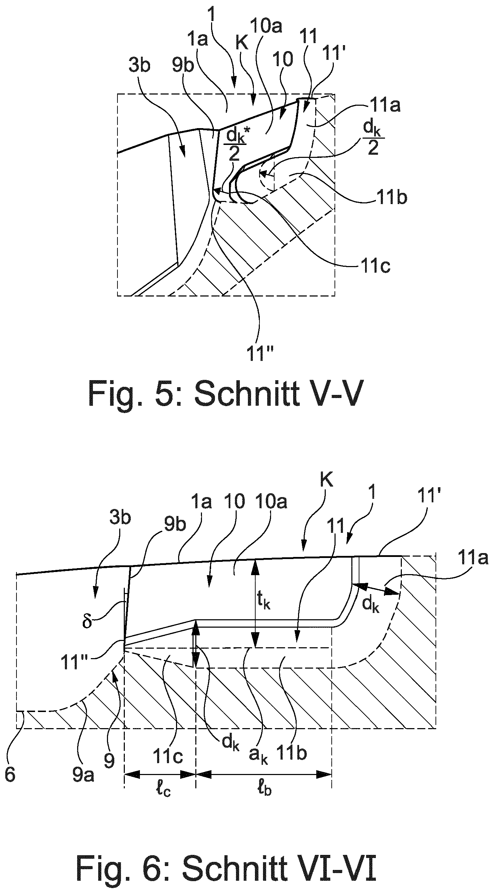

Gemäß Fig. 4 und Fig. 6 setzt sich die Endflanke 9 aus einem unmittelbar an den Rillengrund 6 anschließenden, radial inneren Endflankenabschnitt 9a und einem radial äußeren Endflankenabschnitt 9b zusammen. Wie Fig. 6 zeigt, verläuft der radial innere Endflankenabschnitt 9a, im in der Ebene E liegenden Querschnitt betrachtet (vergl. Lage der Schnittlinie VI-VI in Fig. 2) kreisbogenförmig und schließt knickfrei an den Rillengrund 6 an. Der radial äußere Endflankenabschnitt 9b verläuft, im in die Ebene E projizierten Querschnitt betrachtet, zur radialen Richtung gerade sowie unter einem Winkel δ von 0° bis 10°, insbesondere von 3° bis 7°.

Wie Fig. 4 bis Fig. 6 insbesondere in Verbindung zeigen, ist die bereits erwähnte Kanal-Einschnitt-Kombination K aus einem rohrförmigen Kanal 11 mit einem kreisförmigen Querschnitt und einem in diesen einmündenden Einschnitt 10 gebildet, wobei der Einschnitt 10 und der Kanal 11 gemeinsam in den Verjüngungsabschnitt 3b der Querrille 3 einmünden und wobei - entsprechend der erwähnten symmetrischen Ausgestaltung der Kanal-Einschnitt-Kombination K - sowohl der Kanal 11 als auch der Einschnitt 10 bezüglich der Ebene E (vergl. Fig. 2 und Fig. 3) symmetrisch ausgeführt sind.

Der Einschnitt 10 geht von der Profilrippenaußenfläche 1a aus, verläuft in radialer Richtung ins Innere der schulterseitigen Profilrippe 1 hinein, mündet über den radial äußeren Endflankenabschnitt 9b in den Verjüngungsabschnitt 3b ein und weist zwei in radialer Richtung ausgerichtete Einschnittwände 10a sowie eine konstante Breite b_{E} (Fig. 3) von 0,4 mm bis 1,2 mm, insbesondere von 0,6 mm bis 1,0 mm, auf, wobei die Breite b_{E} kleiner ausgeführt ist als die bereits erwähnte, zum Verjüngungsabschnitt 3b gehörende Breite b_{b} (Fig. 2).

Gemäß Fig. 5 und Fig. 6 verläuft der rohrförmige Kanal 11 zwischen der Profilrippenaußenfläche 1a und dem Verjüngungsabschnitt 3b, wobei der Kanal 11 im Inneren der Profilrippe 1 über seine gesamte Erstreckung an den Einschnitt 10 angrenzend ausgebildet ist, sodass er den Einschnitt 10, im in der Ebene E liegenden Querschnitt betrachtet (Fig. 6), L-förmig umläuft.

Der Kanal 11 setzt sich aus einem Kanalabschnitt 11a, einem mittleren Kanalabschnitt 11b und einem sich verjüngenden Kanalendabschnitt 11c zusammen. Der Kanalabschnitt 11a geht von der Profilrippenaußenfläche 1a aus, weist an dieser eine kreisförmige Kanalöffnung 11' auf, bildet den kürzeren L-Balken der L-Form, verläuft, im in der Ebene E liegenden Querschnitt betrachtet, leicht gebogen, insbesondere halb-U-förmig gebogen (Fig. 6), und weist einen Durchmesser dₖ (Fig. 6) von 170% bis 300%, insbesondere von 220% bis 280%, bevorzugt von 240% bis 260%, der Breite b_{E} (Fig. 3) des Einschnittes 10 auf. Die Kanalöffnung 11' weist zur schulterseitigen Umfangsrille 2 einen Abstand a₁ (Fig. 2) von 2,0 mm bis 8,0 mm, insbesondere von bis zu 5,0 mm auf, wobei der Abstand a₁ als kleinstmöglicher Abstand zwischen der schulterseitigen Umfangsrille 2 und dem Lochkreis der Kanalöffnung 11' ermittelt ist. Der Kanalabschnitt 11b und der Kanalendabschnitt 11c verlaufen radial innerhalb des Einschnittes 10, bilden den längeren L-Balken der L-Form und bilden ferner einen Rotationskörper mit einer Hauptachse aₖ (Fig. 6), welche sich in einer in radialer Richtung Tiefe tₖ von 45% bis 75%, insbesondere von 50% bis 70%, besonders bevorzugt von 55% bis 65%, der maximalen Tiefe tₐ (Fig. 4) des Hauptabschnittes 3a der Querrille 3 befindet. Der Kanalabschnitt 11b weist ebenfalls den bereits erwähnten Durchmesser dₖ sowie ferner eine entlang der Hauptachse aₖ ermittelte Länge l_{b} (Fig. 6) auf. Der Kanalendabschnitt 11c ist in Form eines Kegelstumpfes ausgeführt, weist eine am radial äußeren Endflankenabschnitt 9b der Endflanke 9 der Querrille 3 liegende Kanalöffnung 11" sowie eine entlang der Hauptachse aₖ ermittelte Länge l_{c} (Fig. 6) auf, wobei die Länge l_{c} 30% bis 70%, insbesondere 40% bis 60%, bevorzugt 45% bis 55%, der Länge l_{b} (Fig. 6) beträgt. Der Kanalendabschnitt 11c verengt sich kontinuierlich ausgehend vom Kanalabschnitt 11b zum Verjüngungsabschnitt 3b der Querrille 3, weist am Kanalabschnitt 11b den Durchmesser dₖ und an der Kanalöffnung 11" einen Durchmesser dₖ* (Fig. 5) von 95% bis 105%, insbesondere von 100%, der Breite b_{E} des Einschnittes 10 auf.

Die Erfindung ist auf das beschriebene Ausführungsbeispiel nicht beschränkt, sondern nur durch den Schutzumfang der Ansprüche.

Der Verjüngungsabschnitt 3b und der Schulterabschnitt 3c der Querrille 3 sind optional, wobei bei dieser Ausführung der Hauptabschnitt 3a der Querrille 3 laufstreifenaußenseitig vorzugsweise fortgeführt, also verlängert ist. Die Querrille 3 kann an den Rillenflanken mit in insbesondere bekannter Weise ausgeführten Fasen (Schrägflächen) versehen sein. Ferner können neben den Querrillen 3 weitere Querrillen in der schulterseitigen Profilrippe vorgesehen sein. Der Laufstreifen kann ferner in jeder Schulter eine schulterseitige Profilrippe, welche wie beschrieben ausgeführt ist, aufweisen.

### Bezugsziffernliste

- 1: schulterseitige Profilrippe
- 1a: Profilrippenaußenfläche
- 2: schulterseitige Umfangsrille
- 3: schulterseitige Querrille
- 3a: Hauptabschnitt
- 3b: Verjüngungsabschnitt
- 3c: Schulterabschnitt
- 4: Rillenkante
- 4a: Kantenabschnitt
- 4b: Kantenabschnitt
- 5: Rillenkante
- 5a: Kantenabschnitt
- 5b: Kantenabschnitt
- 6: Rillengrund
- 7: Rillenflanke
- 8: seitliche Flanke
- 9: Endflanke
- 9a: radial innerer Endflankenabschnitt
- 9b: radial äußerer Endflankenabschnitt
- 10: Einschnitt
- 10a: Einschnittwand
- 11: Kanal
- 11a: Kanalabschnitt
- 11b: Kanalabschnitt
- 11c: Kanalendabschnitt
- 11': Kanalöffnung
- 11": Kanalöffnung
- a₁: Abstand
- aₖ: Hauptachse
- bₐ, b_{b}, b_{E}, b_{PR}: Breite
- dₖ, dₖ*: Durchmesser
- E: Ebene
- g₁, g₂: Gerade
- K: Kanal-Einschnitt-Kombination
- 1: Linie (seitlicher Rand der Bodenaufstandsfläche)
- lₐ, l_{b}, l_{c}, l_{QR}: Länge
- tₐ, tₖ: maximale Tiefe
- S₄: Pfeil (Sichtrichtung)
- Z₂: Detail
- α, α', β, β', γ, δ: Winkel

## Patentansprüche

1. Fahrzeugluftreifen mit einem Laufstreifen mit zumindest einer von einer Umfangsrille (2) begrenzten schulterseitigen Profilrippe (1) mit einer in der Laufstreifenperipherie liegenden Profilrippenaußenfläche (1a), wobei die schulterseitige Profilrippe (1) mit einer Vielzahl von in Draufsicht parallel zueinander verlaufenden, vor der Umfangsrille (2) endenden Querrillen (3) mit jeweils einem Rillengrund (6) und einer laufstreifeninnenseitig an den Rillengrund (6) anschließenden und in Fortsetzung zu diesem zur Profilrippenaußenfläche (1a) verlaufenden Endflanke (9) versehen sind,
**dadurch gekennzeichnet,**
**dass** Querrillen (3) vorgesehen sind, bei welchen jeweils innerhalb der schulterseitigen Profilrippe (1) eine über die Endflanke (9) in die jeweilige Querrille (3) einmündende Kanal-Einschnitt-Kombination (K) aus einem von der Profilrippenaußenfläche (1a) ausgehenden Einschnitt (10) mit einer Breite (b_{E}) von 0,4 mm bis 1,2 mm und einem von der Profilrippenaußenfläche (1a) ausgehenden, rohrförmigen Kanal (11) ausgebildet ist, wobei der rohrförmige Kanal (11) über seine gesamte Erstreckung an den Einschnitt (10) angrenzt und diesen L-förmig umläuft, wobei der Kanal (11) einen sich zur Endflanke (9) verjüngenden Kanalendabschnitt (11c) aufweist.

2. Fahrzeugluftreifen nach Anspruch 1, **dadurch gekennzeichnet, dass** der Kanal (11) außerhalb des Kanalendabschnittes (11c) einen Durchmesser (dₖ) von 170% bis 300%, insbesondere von 220% bis 280%, bevorzugt von 240% bis 260%, der Breite (b_{E}) des Einschnittes (10) aufweist.

3. Fahrzeugluftreifen nach Anspruch 1 oder 2, **dadurch gekennzeichnet, dass** der Kanalendabschnitt (11c) die Form eines Kegelstumpfes aufweist.

4. Fahrzeugluftreifen nach einem der Ansprüche 1 bis 3, **dadurch gekennzeichnet, dass** der Kanalendabschnitt (11c) an der Endflanke (9) einen Durchmesser (dₖ*) von 95% bis 105%, insbesondere von 100%, der Breite (b_{E}) des Einschnittes (10) aufweist.

5. Fahrzeugluftreifen nach einem der Ansprüche 1 bis 4, **dadurch gekennzeichnet, dass** sich der Kanal (11) aus dem Kanalendabschnitt (11c), einem von der Profilrippenaußenfläche (1a) ausgehenden Kanalabschnitt (11a) und einem mittleren Kanalabschnitt (11b) zusammensetzt,
wobei der Kanalendabschnitt (11c) mit dem mittleren Kanalabschnitt (11b) den längeren L-Balken der L-Form und der Kanalabschnitt (11a), welcher von der Profilrippenaußenfläche (1a) ausgeht, den kürzeren L-Balken der L-Form bildet.

6. Fahrzeugluftreifen nach Anspruch 5, **dadurch gekennzeichnet, dass** der mittlere Kanalabschnitt (11b) und der Kanalendabschnitt (11c) einen gemeinsamen Rotationskörper mit einer Hauptachse (aₖ) bilden.

7. Fahrzeugluftreifen nach Anspruch 6, **dadurch gekennzeichnet, dass** die Hauptachse (aₖ) des gemeinsamen Rotationskörpers, welcher vom Kanalendabschnitt (11c) und dem mittleren Kanalabschnitt (11b) gebildet ist, in einer in radialer Richtung ermittelten Tiefe (tₖ) von 45% bis 75%, insbesondere von 50% bis 70%, besonders bevorzugt von 55% bis 65%, der maximalen Tiefe (tₐ) der Querrille (3) verläuft.

8. Fahrzeugluftreifen nach Anspruch 6 oder 7, **dadurch gekennzeichnet, dass** der mittlere Kanalabschnitt (11b) und der Kanalendabschnitt (11c) jeweils eine entlang der Hauptachse (aₖ) ermittelte Länge (l_{b}, l_{c}) aufweisen, wobei die Länge (l_{c}) des Kanalendabschnittes (11c) 30% bis 70%, insbesondere 40% bis 60%, bevorzugt 45% bis 55%, der Länge (l_{b}) des mittleren Kanalabschnittes (11b) beträgt.

9. Fahrzeugluftreifen nach einem der Ansprüche 1 bis 8, **dadurch gekennzeichnet, dass** der Kanal (11) an der Profilrippenaußenfläche (1a) eine Kanalöffnung (11') aufweist, die zur schulterseitigen Umfangsrille (2) einen Abstand (a₁) von 2,0 mm bis 8,0 mm, insbesondere von bis zu 5,0 mm, aufweist, wobei der Abstand (a₁) als kleinstmöglicher Abstand zwischen der schulterseitigen Umfangsrille (2) und dem Lochkreis der radial äußeren Kanalöffnung (11') ermittelt ist.

10. Fahrzeugluftreifen nach einem der Ansprüche 1 bis 9, **dadurch gekennzeichnet, dass** die Kanal-Einschnitt-Kombination (K) bezüglich einer Ebene (E), welche von einer in Draufsicht zur axialen Richtung unter einem Winkel (γ) von 0° bis 10°, insbesondere von 2° bis 7°, verlaufenden Geraden (g₁) und einer in radialer Richtung verlaufenden Geraden (g₂) aufgespannt ist, symmetrisch ausgebildet ist.

11. Fahrzeugluftreifen nach Anspruch 10, **dadurch gekennzeichnet, dass** die Ebene (E) die Querrille (3), in Draufsicht betrachtet, in ihrer Längserstreckung durchquert.

12. Fahrzeugluftreifen nach Anspruch 10 oder 11, **dadurch gekennzeichnet, dass** sich die Endflanke (9) der Querrille (3) aus einem unmittelbar an den Rillengrund (6) anschließenden, radial inneren Endflankenabschnitt (9a) und einem zur Profilrippenaußenfläche (1a) verlaufenden radial äußeren Endflankenabschnitt (9b), über welchen die Einschnitt-Kanal-Kombination (K) in die Querrille (3) einmündet, zusammensetzt, wobei der radial äußere Endflankenabschnitt (9b), im in die Ebene (E) projizierten Querschnitt betrachtet, zur radialen Richtung unter einem Winkel (δ) von 0° bis 10°, insbesondere von 3° bis 7°, verläuft und wobei der radial innere Endflankenabschnitt (9a), im in der Ebene (E) liegenden Querschnitt betrachtet, kreisbogenförmig verläuft und knickfrei an den Rillengrund (6) anschließt.

13. Fahrzeugluftreifen nach einem der Ansprüche 1 bis 12, **dadurch gekennzeichnet, dass** die Querrille (3), in Draufsicht betrachtet, einen abschnittweise innerhalb und abschnittsweise außerhalb der Bodenaufstandsfläche verlaufenden Hauptabschnitt (3a) und einen an das laufstreifeninnenseitige Ende des Hauptabschnittes (3a) anschließenden Verjüngungsabschnitt (3b), in welchem die Endflanke (9) ausgebildet ist und welcher sich an der Profilrippenaußenfläche (1a) vom Hauptabschnitt (3a) zum Einschnitt (10) kontinuierlich verschmälert, aufweist.

14. Fahrzeugluftreifen nach Anspruch 13, **dadurch gekennzeichnet, dass** der Hauptabschnitt (3a) innerhalb der Bodenaufstandsfläche an der Profilrippenaußenfläche (1a) eine Breite (bₐ) von 3,0 mm bis 7,0 mm aufweist.

15. Fahrzeugluftreifen nach Anspruch 13 oder 14, **dadurch gekennzeichnet, dass** der Verjüngungsabschnitt (3b) am Niveau der Profilrippenaußenfläche (1a) an seinem laufstreifeninnenseitigen Ende eine Breite (b_{b}) von 1,5 mm bis 3,0 mm, vorzugsweise von höchstens 2,0 mm, aufweist.

## Claims

1. Pneumatic vehicle tyre having a tread with at least one shoulder-side profile rib (1) which is delimited by a circumferential groove (2) and which has a profile-rib outer surface (1a) which lies in the tread periphery, wherein the shoulder-side profile rib (1) is provided with a multiplicity of transverse grooves (3) which, as seen in plan view, extend parallel to one another and which end before the circumferential groove (2) and which each have a groove base (6) and an end flank (9), said end flank adjoining the groove base (6) at a tread inner side and extending as a continuation of said groove base to the profile-rib outer surface (1a),
**characterized**
**in that** provision is made of transverse grooves (3) in the case of which, in each case within the shoulder-side profile rib (1), there is formed a channel-sipe combination (K) which opens out via the end flank (9) into the respective transverse groove (3) and which is composed of a sipe (10), which proceeds from the profile-rib outer surface (1a) and which has a width (b_{E}) of 0.4 mm to 1.2 mm, and of a tubular channel (11), which proceeds from the profile-rib outer surface (1a), wherein the tubular channel (11), over its entire extent, adjoins the sipe (10) and runs around the latter in an L shape, wherein the channel (11) has a channel end portion (11c) which tapers to the end flank (9).

2. Pneumatic vehicle tyre according to Claim 1, **characterized in that**, outside the channel end portion (11c), the channel (11) has a diameter (dₖ) of 170% to 300%, in particular of 220% to 280%, preferably of 240% to 260%, of the width (b_{E}) of the sipe (10).

3. Pneumatic vehicle tyre according to Claim 1 or 2, **characterized in that** the channel end portion (11c) has the shape of a truncated cone.

4. Pneumatic vehicle tyre according to one of Claims 1 to 3, **characterized in that**, at the end flank (9), the channel end portion (11c) has a diameter (dₖ*) of 95% to 105%, in particular of 100%, of the width (b_{E}) of the sipe (10).

5. Pneumatic vehicle tyre according to one of Claims 1 to 4, **characterized in that** the channel (11) is composed of the channel end portion (11c), a channel portion (11a) proceeding from the profile-rib outer surface (1a) and a middle channel portion (11b),
wherein the channel end portion (11c) forms together with the middle channel portion (11b) the longer L leg of the L shape, and the channel portion (11a) proceeding from the profile-rib outer surface (1a) forms the shorter L leg of the L shape.

6. Pneumatic vehicle tyre according to Claim 5, **characterized in that** the middle channel portion (11b) and the channel end portion (11c) form a common body of rotation having a main axis (aₖ).

7. Pneumatic vehicle tyre according to Claim 6, **characterized in that** the main axis (aₖ) of the common body of rotation formed by the channel end portion (11c) and the middle channel portion (11b) extends at a depth (tₖ), determined in a radial direction, of 45% to 75%, in particular of 50% to 70%, particularly preferably of 55% to 65%, of the maximum depth (tₐ) of the transverse groove (3).

8. Pneumatic vehicle tyre according to Claim 6 or 7, **characterized in that** the middle channel portion (11b) and the channel end portion (11c) each have length (1_{b}, 1_{c}) determined along the main axis (aₖ), wherein the length (1_{c}) of the channel end portion (11c) is 30% to 70%, in particular 40% to 60%, preferably 45% to 55%, of the length (1_{b}) of the middle channel portion (11b).

9. Pneumatic vehicle tyre according to one of Claims 1 to 8, **characterized in that**, at the profile-rib outer surface (1a), the channel (11) has a channel opening (11') which is at a distance (a₁) of 2.0 mm to 8.0 mm, in particular of up to 5.0 mm, from the shoulder-side circumferential groove (2), wherein the distance (a₁) is determined as the shortest possible distance between the shoulder-side circumferential groove (2) and the hole circle of the radially outer channel opening (11).

10. Pneumatic vehicle tyre according to one of Claims 1 to 9, **characterized in that** the channel-sipe combination (K) is formed so as to be symmetrical in relation to a plane (E) which is spanned by a straight line (g₁) that, as seen in in plan view, extends at an angle (γ) of 0° to 10°, in particular of 2° to 7°, to the axial direction and a straight line (g₂) that extends in the radial direction.

11. Pneumatic vehicle tyre according to Claim 10, **characterized in that** the plane (E) extends all the way through the transverse groove (3), as seen in plan view, in the longitudinal extent thereof.

12. Pneumatic vehicle tyre according to Claim 10 or 11, **characterized in that** the end flank (9) of the transverse groove (3) is composed of a radially inner end-flank portion (9a), which directly adjoins the groove base (6), and a radially outer end-flank portion (9b), which extends to the profile-rib outer surface (1a) and via which the sipe-channel combination (K) opens out into the transverse groove (3), wherein the radially outer end-flank portion (9b), as seen in a cross section projected into the plane (E), extends at an angle (δ) of 0° to 10°, in particular of 3° to 7°, to the radial direction, and wherein the radially inner end-flank portion (9a), as seen in the cross section in the plane (E), extends in a circular-arc shaped manner and adjoins the groove base (6) without a kink.

13. Pneumatic vehicle tyre according to one of Claims 1 to 12, **characterized in that** the transverse groove (3), as seen in plan view, has a main portion (3a), which extends sectionally within and sectionally outside the ground contact area, and a tapered portion (3b), which adjoins the tread-inner-side end of the main portion (3a) and in which the end flank (9) is formed and which, at the profile-rib outer surface (1a), continuously narrows from the main portion (3a) to the sipe (10).

14. Pneumatic vehicle tyre according to Claim 13, **characterized in that**, within the ground contact area, the main portion (3a) has a width (bₐ) of 3.0 mm to 7.0 mm at the profile-rib outer surface (1a).

15. Pneumatic vehicle tyre according to Claim 13 or 14, **characterized in that**, at the level of the profile-rib outer surface (1a), the tapered portion (3b) has at its tread-inner-side end a width (b_{b}) of 1.5 mm to 3.0 mm, preferably of at most 2.0 mm.

## Revendications

1. Pneumatique de véhicule avec une bande de roulement avec au moins une nervure de profil (1) côté épaulement, délimitée par une rainure périphérique (2), avec une surface extérieure de nervure de profil (1a) située dans la périphérie de la bande de roulement, la nervure de profil (1) côté épaulement étant munie d'une pluralité de rainures transversales (3) s'étendant parallèlement les unes aux autres en vue de dessus, se terminant avant la rainure périphérique (2), avec chacune un fond de rainure (6) et un flanc d'extrémité (9) se raccordant au fond de rainure (6) du côté intérieur de la bande de roulement et s'étendant dans le prolongement de celui-ci vers la surface extérieure de nervure de profil (1a),
**caractérisé en ce que**
des rainures transversales (3) sont prévues, pour lesquelles, à chaque fois à l'intérieur de la nervure de profil (1) côté épaulement, une combinaison canal-incision (K) débouchant dans la rainure transversale (3) respective par le biais du flanc d'extrémité (9) est réalisée à partir d'une incision (10) partant de la surface extérieure de nervure de profil (1a) avec une largeur (b_{E}) de 0,4 mm à 1,2 mm et d'un canal tubulaire (11) partant de la surface extérieure de nervure de profil (1a), le canal tubulaire (11) étant adjacent à l'incision (10) sur toute son étendue et entourant celle-ci en forme de L, le canal (11) présentant une section d'extrémité de canal (11c) se rétrécissant vers le flanc d'extrémité (9).

2. Pneumatique de véhicule selon la revendication 1, **caractérisé en ce que** le canal (11) présente, en dehors de la section d'extrémité de canal (11c), un diamètre (dₖ) de 170 % à 300 %, notamment de 220 % à 280 %, de préférence de 240 % à 260 %, de la largeur (b_{E}) de l'incision (10).

3. Pneumatique de véhicule selon la revendication 1 ou 2, **caractérisé en ce que** la section d'extrémité de canal (11c) présente la forme d'un cône tronqué.

4. Pneumatique de véhicule selon l'une quelconque des revendications 1 à 3, **caractérisé en ce que** la section d'extrémité de canal (11c) présente, sur le flanc d'extrémité (9), un diamètre (dₖ*) de 95 % à 105 %, notamment 100 %, de la largeur (b_{E}) de l'incision (10).

5. Pneumatique de véhicule selon l'une quelconque des revendications 1 à 4, **caractérisé en ce que** le canal (11) se compose de la section d'extrémité de canal (11c), d'une section de canal (11a) partant de la surface extérieure de nervure de profil (1a) et d'une section de canal centrale (11b),
la section d'extrémité de canal (11c) formant avec la section de canal centrale (11b) la barre de L la plus longue de la forme en L et la section de canal (11a) qui part de la surface extérieure de nervure de profil (1a) formant la barre de L la plus courte de la forme en L.

6. Pneumatique de véhicule selon la revendication 5, **caractérisé en ce que** la section de canal centrale (11b) et la section d'extrémité de canal (11c) forment un corps de révolution commun ayant un axe principal (aₖ).

7. Pneumatique de véhicule selon la revendication 6, **caractérisé en ce que** l'axe principal (aₖ) du corps de révolution commun formé par la section d'extrémité de canal (11c) et la section de canal centrale (11b) s'étend à une profondeur (tₖ), déterminée dans la direction radiale, de 45 % à 75 %, notamment de 50 % à 70 %, de manière particulièrement préférée de 55 % à 65 %, de la profondeur maximale (tₐ) de la rainure transversale (3).

8. Pneumatique de véhicule selon la revendication 6 ou 7, **caractérisé en ce que** la section de canal centrale (11b) et la section d'extrémité de canal (11c) présentent chacune une longueur (1_{b}, 1_{c}) déterminée le long de l'axe principal (aₖ), la longueur (1_{c}) de la section d'extrémité de canal (11c) représentant 30 % à 70 %, notamment 40 % à 60 %, de préférence 45 % à 55 %, de la longueur (1_{b}) de la section de canal centrale (11b).

9. Pneumatique de véhicule selon l'une quelconque des revendications 1 à 8, **caractérisé en ce que** le canal (11) présente, sur la surface extérieure de nervure de profil (1a), une ouverture de canal (11') qui présente, par rapport à la rainure périphérique (2) côté épaulement, une distance (a₁) de 2,0 mm à 8,0 mm, notamment de jusqu'à 5,0 mm, la distance (a₁) étant déterminée comme étant la plus petite distance possible entre la rainure périphérique (2) côté épaulement et le cercle de trou de l'ouverture de canal (11') radialement extérieure.

10. Pneumatique de véhicule selon l'une quelconque des revendications 1 à 9, **caractérisé en ce que** la combinaison canal-incision (K) est réalisée de manière symétrique par rapport à un plan (E) qui est défini par une droite (g₁) s'étendant en vue de dessus par rapport à la direction axiale selon un angle (γ) de 0° à 10°, notamment de 2° à 7°, et par une droite (g₂) s'étendant dans la direction radiale.

11. Pneumatique de véhicule selon la revendication 10, **caractérisé en ce que** le plan (E) traverse la rainure transversale (3), vue de dessus, dans son extension longitudinale.

12. Pneumatique de véhicule selon la revendication 10 ou 11, **caractérisé en ce que** le flanc d'extrémité (9) de la rainure transversale (3) se compose d'une section de flanc d'extrémité (9a) radialement intérieure, se raccordant directement au fond de rainure (6), et d'une section de flanc d'extrémité (9b) radialement extérieure, s'étendant vers la surface extérieure de nervure de profil (1a), par le biais de laquelle la combinaison incision-canal (K) débouche dans la rainure transversale (3), la section de flanc d'extrémité radialement extérieure (9b), vue en coupe transversale projetée dans le plan (E), s'étendant par rapport à la direction radiale selon un angle (δ) de 0° à 10°, notamment de 3° à 7°, et la section de flanc d'extrémité radialement intérieure (9a), vue en coupe transversale située dans le plan (E), s'étendant en forme d'arc de cercle et se raccordant sans coude au fond de rainure (6).

13. Pneumatique de véhicule selon l'une quelconque des revendications 1 à 12, **caractérisé en ce que** la rainure transversale (3), vue de dessus, présente une section principale (3a) s'étendant par sections à l'intérieur et par sections à l'extérieur de la surface de contact avec le sol et une section de rétrécissement (3b) se raccordant à l'extrémité côté intérieur de la bande de roulement de la section principale (3a), dans laquelle est réalisé le flanc d'extrémité (9) et qui se rétrécit continuellement sur la surface extérieure de nervure de profil (1a), de la section principale (3a) à l'incision (10).

14. Pneumatique de véhicule selon la revendication 13, **caractérisé en ce que** la section principale (3a) à l'intérieur de la surface de contact avec le sol sur la surface extérieure de nervure de profil (1a) présente une largeur (bₐ) de 3,0 mm à 7,0 mm.

15. Pneumatique de véhicule selon la revendication 13 ou 14, **caractérisé en ce que** la section de rétrécissement (3b) au niveau de la surface extérieure de nervure de profil (1a) présente une largeur (b_{b}) de 1,5 mm à 3,0 mm, de préférence d'au plus 2,0 mm, à son extrémité côté intérieur de la bande de roulement.
